Europäisches Patentamt

European Patent Office

Office européen des brevets

(11) Publication number: **0 031 634**
**A1**

# EUROPEAN PATENT APPLICATION

(21) Application number: 80302406.6

(22) Date of filing: 17.07.80

(51) Int. Cl.³: **B 01 D 59/34**

(30) Priority: 21.12.79 US 106372

(71) Applicant: Exxon Research and Engineering Company, P.O.Box 390 200 Park Avenue, Florham Park New Jersey 07932 (US)

(72) Inventor: Cox, Donald Martin, 14 Beechwood Place, Watchung, New Jersey (US)
Inventor: Kaldor, Andrew, 418 Ridge Road, Watchung, New Jersey (US)
Inventor: Priestley, Eldon Bruce, 83 Oak Creek Road, East Windsor, New Jersey (US)
Inventor: Hall, Richard Barry, 253 Greenwood Terrace, Hillside, New Jersey (US)

(43) Date of publication of application: 08.07.81 Bulletin 81/27

(74) Representative: Pitkin, Robert Wilfred et al, 5 Hanover Square, London W1R 9HE (GB)

(84) Designated Contracting States: **BE CH DE FR GB LI NL SE**

(54) Method of separating isotopes.

(57) A method of separating isotopes of an element, for example uranium, comprises providing molecules of a compound of the element which have isotopically shifted infrared absorption spectra. For uranium such molecules can be a mixture of $^{235}UO_2$- and $^{238}UO_2$-containing molecules of $UO_2(A_1A_2).L$, where $A_1$ and $A_2$ are monovalent anions, such as $CF_3COCHCOCF_3$, and L is neutral ligand, such as trimethylphosphate. The molecules are irradiated at a first infrared absorption frequency to isotopically selectively dissociate them and provide molecular fragments containing the element. The fragments are then irradiated at a second infrared absorption frequency shifted, preferably to the blue of the first frequency, by less than about 100 $cm^{-1}$. Preferably initiation of the second irradiation occurs between 0.1 and 10 microseconds after initiation of the first irradiation.

In Belgian Patent No. 867,647, a process for the separation of the isotopes of uranium is disclosed which employs a volatile $UO_2$-bearing molecule which is irradiated by means of a $CO_2$ infrared laser. This Belgian patent teaches that isotopic selectivity can be achieved by operating in this fashion.

U.S. Patent 4,096,046 teaches the use of two lasers for the separation of uranium isotopes. This patent teaches that $UF_5$ is a more appropriate compound for laser isotope separation than is $UF_6$, but that $UF_5$ is not volatile. Thus, this patent teaches the use of a first laser operating in the ultraviolet region for dissociating the $UF_6$, and then the use of a second laser in the visible to far ultraviolet region in order to dissociate the transient $UF_5$ on an isotopically selective basis. This patent also suggests that if it were possible to selectively dissociate the $UF_6$, that would be desirable.

In U.S. Patent No. 4,096,046, the frequency of the second laser is specified as being anywhere from between 13,000 wavenumbers below to 67,000 wavenumbers above that of the irradiation of the first laser. This disclosure does not provide much guidance with regard to the proper frequency for irradiation with the second laser, at the second frequency, even in the case of the molecule disclosed in that patent, let alone for substantially dissimilar molecules.

In accordance with the teachings of this invention, it has now been discovered that when employing molecules which contain an element whose isotopes are to be separated and which have an isotopically shifted infrared absorption spectrum associated with the isotopes of that element, such as $UO_2(A_1A_2)\cdot L$, where U is that element, and thus a mixture of $^{235}UO_2$ and $^{238}UO_2$-containing molecules are provided, and irradiating such molecules at a first infrared absorption frequency so as to isotopically selectively dissociate said molecules, the energy need not be absorbed directly by the bond to be dissociated. Indeed, it is possible, and in fact desirable, that the energy be absorbed in a part of the molecule remote from the bond that dissociates. This separation of the site of energy deposition from the site of reaction within the molecule ensures that the site of energy deposition is preserved intact after dissociation and resides in one of the primary photofragments. Thus, in the case of molecules having the formula $UO_2(A_1A_2)\cdot L$, energy deposited through absorption by the $UO_2$ vibration results in dissociation of the molecule while leaving the $UO_2$ moiety intact. Molecular fragments which contain the $UO_2$ moiety are thus provided by such dissociation and, in fact, after a period of time determined by the rate of appearance of these fragments, a further irradiation of these $UO_2$-containing fragments can occur at a frequency shifted from the frequency of the first irradiation by less than about 100 $cm^{-1}$.

It has thus been realized that commercially available $CO_2$ lasers can be employed not only for the initial isotopically-selective irradiation step, but for the further selective irradiation of the $UO_2$-bearing molecular fragments.

In a preferred embodiment of the present invention, the second infrared absorption frequency is shifted to the blue of the first infrared absorption frequency. Preferably, in such a process, and particularly in connection with the irradiation of the above $UO_2$-containing molecules, the irradiation at the second infrared absorption frequency occurs at least some time between 0.1 to 10 microseconds after initiation of the first irradiation step.

In another embodiment of the present invention, irradiation of the fragments at a second infrared absorption frequency is carried out with sufficient laser power to cause an irreversible reaction to occur.

In a preferred embodiment of this invention, however, irradiation at the second infrared absorption frequency is also carried out in an isotopically selective manner, and then irradiation at a third infrared absorption frequency is carried out, preferably with sufficient laser power to cause an irreversible reaction to occur. Further such steps could, however, also be utilized in such a process.

Belgian Patent No. 867,647 discloses a process for the separation of isotopes by irradiating $UO_2$-containing compounds with infrared radiation which is preferentially absorbed by a molecular vibration of molecules of the compound containing a predetermined isotope of the element which is to be separated so as to provide excited molecules of that compound which are enriched in the molecules containing the predetermined isotope, thus enabling separation of those excited molecules. This may be accomplished by vaporizing volatile uranyl compounds having an isotopically shifted infrared absorption spectrum associated with the element whose isotopes are to be separated, and then irradiating the vaporized uranyl compound, preferably at wavelengths of from about 810 to 1116 $cm^{-1}$. This irradiation may be carried out under conditions such that the excited molecules dissociate, so as to achieve separation of these excited molecules.

In one embodiment, irradiation is carried out at temperatures of less than about 200°C, preferably less than about 130°C, and preferably under conditions whereby the uranyl compound has a vapor pressure of at least about 0.02 torr. In particular, the process is preferably carried out in an essentially collisionless environment. This may be accomplished, for example, by adjusting the vapor pressure and excitation pulse width such that the product of this collision frequency and pulse duration is less than 1. On the other hand, this may also be accomplished by maintaining the vaporized uranyl compound in a beam under essentially collisionless conditions. In order to conduct isotopically selective dissociation of the molecules of the present invention, and provide molecular fragments

- 4 -

0031634

bearing the element whose isotopes are to be separated, the initial irradiation step of this invention is thus primarily carried out in accordance with these principles.

These same general principles will, of course, also apply to subsequent irradiation steps in accordance with the present invention, such as where two or more irradiation steps are carried out, each of which is intended to isotopically selectively dissociate such molecules and the molecular fragments thereof. Furthermore, these irradiation steps can be carried out by utilizing a pair of lasers (such as $CO_2$ lasers) or more, each emitting the appropriate infrared radiation, i.e., at the appropriate frequencies, or a single such laser could be employed, in which case that laser could itself be used to deliver infrared radiation at the two or more desired frequencies.

In connection with the separation of the isotopes of uranium, a class of $UO_2$-containing molecules which are useful in such a process are those having the formula $UO_2AA'L_n$, n being either 0 or 1, and A and A' being anions whose conjugate acids have boiling points less than about 200°C and $pK_a$ values of 4.8 or lower, preferably the same anions, and in which L is a neutral ligand having a boiling point of less than 190°C and an equilibrium constant for its exchange reaction with tetrahydrofuran ranging from about $10^{-3}$ to $10^3$. Preferred anions can be either monodentate or polydentate, but will preferably be bidentate, and they will also preferably be monovalent. These will include compounds such as 1,1,1,5,5,5-hexafluoro-2,4-pentanedionate ($CF_3COCHCOCF_3$); 1,1,1,-trifluoro-2,4-pentanedionate ($CF_3COCHCOCH_3$); 3-trifluoro-methyl-1,1,1,5,5,5-hexafluoroacetylacetonate (($CF_3CO)_2CCF_3$); 3-trifluoroacetyl-1,1,1,5,5,5-hexafluoro-2,4-pentanedionate (($CF_3CO)_3C$); 3-fluoro-1,1,1,5,5,5-hexafluoroacetylacetonate (($CF_3CO)_2CF$); 1,1,1,2,2,3,3,7,7,7-decafluoro-4,6-heptanedionate ($CF_3COCHCOC_3F_7$); 1,1,1,2,2,6,6,7,7,7-decafluoro-3,5-heptanedionate ($C_2F_5COCHCOC_2F_5$), etc.

Preferred neutral ligands L include tetrahydrofuran, isopropanol, ethanol, isobutanol, tert-butanol, ethylacetate, n-propanol, methanol, acetone, dimethylformamide, pyridine, cyclopentanone, dimethylsulfoxide, acrylonitrile, acetonitrile, tetrahydrothiophene, ethyl ether and 1,4-dioxane.

Another class of $UO_2$-containing compounds which are useful in this process are those having the general formula $UO_2AL_n$, where n is from 0 to 5, and A and L are the same as A, A' and $L_n$ above.

In addition, the $UO_2$-containing compounds for use in this invention can also have the formula $(UO_2AA')_n$, where n is greater than one, and preferably from 2 to 4, i.e. such that the dimer compound $(UO_2AA')_2$ is included therein.

Furthermore, the neutral ligand L in the above formula $UO_2AA' \cdot L$ will preferably be a base stronger than THF toward the uranyl ion, that is, L should have an equilibrium constant for its exchange reaction with the complexed tetrahydrofuran of greater than 1. These compounds thus include such compounds where L is trimethylphosphate (TMP), triethylphosphineoxide, hexamethylphosphoramide, dimethylsulfoxide and pyridine.

In a preferred embodiment of the present invention, $UO_2$(1,1,1,5,5,5-hexafluoro-2,4-pentanedionate)$_2 \cdot$ trimethylphosphate ($UO_2$(hfacac)$_2 \cdot$TMP) is provided in the vapor phase under static conditions in a suitable cell. The static conditions employed include having the $UO_2$(hfacac)$_2$ $\cdot$TMP present at a partial pressure in the range of from about 0.01 to about 10 torr and at a temperature in the range of from about 80 to 200°C. Of course, the particular pressures and temperatures selected will be dependent upon each other since higher pressures will be produced by the higher temperatures, and the particular conditions employed will be such as to provide this material in the vapor phase, while at the same time attempting to minimize the total thermal energy of each molecule. The pressure ranging of from .01 to 10 torr corresponds to the observed range of saturated vapor pressures of $UO_2(hfacac)_2 \cdot TMP$ in the indicated temperature range.

The output beams from two separately grating tunable pulsed $CO_2$ lasers are combined such that spatial overlap is maximized, e.g., by use of the polarization dependent optical properties of a polished single crystal germanium flat intersecting the beams at a small angle near Brewster's angle, or by counterpropagating the beams along the same path. These beams are directed at the sample cell and enter the $UO_2(hfacac)_2 \cdot TMP$ vapor through an infrared transmitting ZnSe window. Pulses from the two lasers are separated in time by an adjustable delay between the instants at which the lasers are triggered. The particular pulse widths of the two lasers used are not critical to the operation of the process, provided that they are comparable to or shorter than the mean collision time between molecules. However, the laser pulse width can be important in determining the appropriate delay.

The $UO_2(hfacac)_2 \cdot TMP$ vapor, containing both $^{235}U$ and $^{238}U$ isotopes, is irradiated by the first $CO_2$ laser pulse tuned to a frequency in the range $954 \pm 4 cm^{-1}$ to produce $UO_2(hfacac)_2$ enriched in one of the isotopes of uranium, and free TMP. The degree of enrichment achieved depends upon the frequency chosen. For the temperature range indicated, a large fraction of the $UO_2(hfacac)_2 \cdot TMP$ can be dissociated without seriously compromising the maximum achievable selectivity at a given frequency, but the enrichment decreases rapidly with increasing dissociation yield above 70%. In particular, in Table I, the fractional yields at varying laser pulse energy densities are set forth. The data in Table I is taken at a frequency of $954.56 cm^{-1}$ for the molecule $UO_2(hfacac)_2 \cdot TMP$, and shows that a dissociation yield of about 70% in this case is achieved with a laser pulse energy density in the range of about 75 to 85 $mJ/cm^2$. The energy required for each particular degree of dissociation will, however, also be dependent upon the particular frequency which is chosen. Thus, in Table II, the cross-section for excitation from various $CO_2$ laser transitions is shown. By employing these factors, in comparison to the data shown for the P(8) transition, the energy fluence required for a certain dissociation fraction in connection with each of these particular frequencies shown in Table II can be readily determined from the requirement that the laser fluence times the absorption cross-section is a constant.

It is further noted that in the absence of the second laser pulse described below, photodissociation induced by the first laser under these irradiation conditions is reversible. A second laser pulse delayed with respect to the first laser pulse, and in this case tuned to a frequency in the range of $967 \pm 4cm^{-1}$, is used to irradiate the isotopically enriched $UO_2(hfacac)_2$ produced in the first photodissociation step. The reason that the second laser pulse is delayed with respect to the first laser pulse is that the $UO_2(hfacac)_2$ is transient in nature and does not form in sufficient quantity for approximately 1/10th of a microsecond after irradiation by the first laser pulse, and on the other hand becomes involved in collisional reactions leading to loss of isotopic selectivity in a time commensurate with the time required for about one to ten collisions. This time varies linearly with the partial pressure of each reactant, including the $UO_2(hfacac)_2$ fragment, and will therefore depend not only on the initial pressure, but also on the extent of dissociation resulting from the first laser pulse. Under conditions where the present invention is preferably operated, this time is in the range of from about 0.05 microseconds to 50 microseconds. It should also be noted that since the width of the second laser pulse is only 70 nanoseconds, if it were activated at the same time as the first laser pulse, there

would be no $UO_2(hfacac)_2$ present for it to irradiate. Of course, this process could be performed with two CW lasers, but the photon efficiency of such a process would be substantially lower. At pulse energy densities of at least about 1.5 Joules per square centimeter or greater, the second pulse causes irreversible photochemistry to occur in which the doubly irradiated uranyl species condense and collect on the inner surfaces of the irradiation cell.

In our copending European patent application No. based on U.S. application serial No. 106373 there is described a method of separating isotopes of an element, for example uranium, which comprises providing molecules of a compound of the element having an isotopically shifted, but overlapping, infrared absorption spectrum associated with the isotopes of the element which does not change appreciably on absorption of photons. For uranium such molecules can be mixtures of $^{235}UO_2-$ and $^{238}UO_2-$ containing molecules of $UO_2A_1A_2 \cdot L$; $A_1$ and $A_2$ being monovalent anions, for example $CF_3COCHCOCF_3$, and L a neutral ligand, for example trimethylphosphate. The molecules are irradiated at an infrared absorption frequency to isotopically selectively dissociate said molecules to provide molecular fragments over a time interval, and collecting only those fragments which dissociate within a predetermined portion of the time interval, for example between 0.1 and 10 microseconds after initiation of irradiation. Collection can comprise a second irradiation shifted by upto 100 $cm^{-1}$ and of pulsewidth less than 5 microseconds.

## TABLE I

| TEA LASER Pulse Energy Fluence $mJ/cm^2$ | Fractional Yield at 954.56 $cm^{-1}$ (Peak for $UO_2(hfacac)_2 \cdot TMP$) |
|---|---|
| 155 | .94 |
| 115 | .83 |
| 86 | .75 |
| 58 | .57 |
| 42 | .39 |
| 30 | .27 |
| 24 | .18 |
| 17 | .12 |

## TABLE II

| $CO_2$ Laser Frequency | Transition | Cross-Section for Excitation (x $10^{18} cm^2$) |
|---|---|---|
| 947.78 | P(16) | 0.2 |
| 949.49 | P(14) | 0.4 |
| 951.20 | P(12) | 1.3 |
| 952.93 | P(10) | 2.4 |
| 954.56 | P(8) | 4.3 |
| 956.21 | P(6) | 3.3 |
| 957.76 | P(4) | 2.2 |
| 959.40 | P(2) | 1.0 |
| 963.30 | R(2) | 0.3 |
| 964.79 | R(4) | 0.2 |
| 966.28 | R(6) | 0.1 |

WHAT WE CLAIM IS:

1. A method of separating isotopes of an element, characterized by including the steps of:

(1) providing molecules of a compound of the element having an isotopically shifted infrared absorption spectrum associated with the isotopes of the element;

(2) irradiating said molecules at a first infrared absorption frequency to isotopically selectively dissociate said molecules to provide molecular fragments which contain the element; and

(3) irradiating said fragments at a second infrared absorption frequency shifted from the first infrared absorption frequency by less than about $100 \mathrm{cm}^{-1}$.

2. The method of claim 1 in which said molecules comprise a mixture of $^{235}UO_2$-and $^{238}UO_2$-containing molecules.

3. A method as claimed in claim 1 or claim 2, characterized in that the second infrared absorption frequency is shifted to the blue of the first infrared absorption frequency.

4. A method of separating isotopes of uranium, characterized by including the steps of:

(1) providing a mixture of $^{235}UO_2$-and $^{238}UO_2$-containing molecules of $UO_2(A_1A_2).L$, where $A_1$ and $A_2$ comprise monovalent anions and L comprises a neutral ligand;

(2) irradiating the molecules of $UO_2(A_1A_2).L$ at a first infrared $UO_2$ absorption frequency to isotopically selectively dissociate the molecules to provide $UO_2$ bearing molecular fragments; and

(3) irradiating the fragments at a second infrared $UO_2$-absorption frequency shifted from said first infrared $UO_2$-absorption frequency by less than $100 \mathrm{cm}^{-1}$.

5. A method as claimed in claim 4, characterized in that the anions have conjugate acids having a boiling point less than $200^\circ C$ and $PK_a$ values of 4.8 or lower.

6. A method as claimed in claim 2 or claim 4, characterized in that the irradiation is of sufficient power to cause an irreversible reaction to occur.

7. A method as claimed in claim 2 or claim 4, characterized in that the irradiation is isotopically selective and a further step is performed to produce an irreversible reaction.

8. A method as claimed in any one of claims 2 and 4 to 7, characterized without the second infrared $UO_2$ absorption frequency is shifted to the blue of said infrared $UO_2$ absorption frequency.

9. A method as claimed in any one of claims 2 and 4 to 8, characterized in that the irradiation at the second infrared $UO_2$ absorption frequency occurs at least some time between 0.1 and 10 microseconds after initiation of the first irradiation.

European Patent
Office

**EUROPEAN SEARCH REPORT**

0031634
Application number

EP 80 30 2406

| | **DOCUMENTS CONSIDERED TO BE RELEVANT** | | **CLASSIFICATION OF THE APPLICATION (Int. Cl.³)** |
|---|---|---|---|
| Category | Citation of document with indication, where appropriate, of relevant passages | Relevant to claim | |
| | FR - A - 2 394 320 (EXXON)<br>* Claims 1,8; page 16, example 4 *<br>--<br>FR - A - 2 413 120 (EXXON)<br>* Claims 1,5,6 *<br>-- | 1,2,4<br><br><br>1,2,4 | B 01 D 59/34 |
| A | US - A - 4 097 384 (COLEMAN)<br>* Claims 1,6,9; abstract *<br>---- | 1 | |

**TECHNICAL FIELDS SEARCHED (Int. Cl.³)**

~~B 01 D 59/34~~
59/50
59/60

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-12-1980 | NICOLAS |

EPO Form 1503.1  06.78